# NEW EUROPEAN PATENT SPECIFICATION

(11) **EP 1 404 188 B2**
(45) Date of publication and mention of the opposition decision: **26.09.2018**
(45) Mention of the grant of the patent: 16.05.2007
(21) Application number: 02754594.6
(22) Date of filing: 27.05.2002
(51) Int. Cl.: A23L 33/10

(54) **BOUILLON POWDER**
PULVERFORMIGE BRÜHE
POUDRE DE BOUILLON

(30) Priority: 20.06.2001 EP 01202379
(43) Date of publication of application: 07.04.2004
(73) Proprietor: Nestec S.A., 1800 Vevey (CH)
(72) Inventor: PALZER, Stefan, CH-8320 Fehraltorf (CH); KAPPELER, Cecilia, CH-8484 Neschwil (CH); ENGGIST, A., CH-8302 Kloten (CH); HARRIS, Brenda, P., CH-8422 Pfungen (CH)
(74) Representative: Elleby, Gudrun
(86) International application number: PCT/EP2002/005832
(87) International publication number: WO 2003/000076

(56) References cited:
- EP-A- 0 021 483
- EP-A- 0 764 407
- EP-A- 0 780 058
- EP-A- 0 888 723
- WO-A-98/12934
- GB-A- 1 470 646

## Description

The present invention relates to a bouillon powder, especially a bouillon powder in single particle form, in granulated form or in agglomerated form and to a process for the production of a bouillon powder.

A conventional way of manufacturing a bouillon powder in single particle form comprises mixing powdered bouillon components with low amounts of oil and/or fat.

A conventional way of manufacturing a granulated bouillon powder comprises mixing powdered bouillon components with low amounts of oil and/or fat and compacting the mix into granules.

A conventional way of manufacturing an agglomerated bouillon powder comprises mixing powdered bouillon components with low amounts of oil and/or fat and agglomerating the single particles thus obtained into agglomerates.

Nowadays there is a nutritional trend to avoid or at least reduce consumption of fats rich in trans fatty acids and saturated fatty acids and to preferably consume healthy oils rich in monounsaturated fatty acids and/or polyunsaturated fatty acids such as sunflower, safflower, canola and/or olive oil, for example.

A first object of the present invention is to provide a free flowing bouillon powder which only or mainly contains oil, especially a healthy oil rich in monounsaturated fatty acids and/or polyunsaturated fatty acids, and no or only little fat beside non fat conventional bouillon ingredients.

A second object of the present invention is to provide a bouillon powder which has no or only little fat solidification after rehydratation with hot water when the rehydrated product is getting cold.

A third object of the present invention is to provide a bouillon powder which has an improved cold water solubility.

A fourth object of the present invention is to provide a process for manufacturing such a bouillon powder.

It has now been found that the first three objects of the present invention can be met by a bouillon powder, which comprises, in total powder weight %, from 1 to 20% of an oil and possibly fat, from 4 to 95% of a milled filler, and up to 95% of a non milled filler, and, in total oil and fat weight %, up to 40% or preferably up to 30%, even more preferably up to 20% or even up to 10%, and still even more preferably up to only 5% or even up to only 1% fat, as well as optionally spices, flavours, and/or plant extracts; wherein the milled filler is a milled crystalline ingredient and has a mean diameter of from 5 to 80 µm; wherein the total amount of milled filler is up to 95%.

The fourth object of the present invention can be met by a process for the production of a bouillon powder, which consists of preparing a premix of powdered constituents comprising, in total powder weight %, from 4 to 95% of a milled filler, up to 95% of a non milled filler, and optionally spices, flavours, and/or plant extracts, and atomising an emulsion comprising, in total powder weight %, from 1 to 20% of an oil and possibly fat and up to 10%, preferably up to 8% and more preferably up to 4% of water onto the dry premix while further mixing, and wherein, in total oil and fat weight %, up to 40% or preferably up to 30%, even more preferably up to 20% or even up to 10%, and still even more preferably up to only 5% or even up to only 1% fat are added to the dry premix and/or to the emulsion; wherein the milled filler is a milled crystalline ingredient and has a mean diameter of from 5 to 80 µm; wherein the total amount of milled filler is up to 95%.

Throughout the present description, the expression "bouillon" is to be understood as meaning "bouillon and/or seasoning".

The expression "bouillon powder in single particle form" means "particles of bouillon powder directly obtained by mixing premix and oil".

The expression "bouillon powder in granulated form" means "granulated bouillon powder obtained by granulating a bouillon powder in single particle form".

The expression "bouillon powder in agglomerated form" means "agglomerated bouillon powder obtained by agglomerating a bouillon powder in single particle form".

The expression "oil" means "oil or mixture of oils which is liquid at room temperature and which more especially has a solid fat content (SFC) of less than 5% at 20°C".

The expression "milled filler" means "a powdered filler which has been milled to an especially fine granulometry or which has an especially fine granulometry".

The expression "non milled filler" means "a powdered filler which has not been milled to an especially fine granulometry or which does not have an especially fine granulometry".

Thus, it has surprisingly been found that it is possible to have up to 20% oil and no or only little amounts of hardened fat entrapped in the particles of a bouillon powder provided the particles also comprise a milled filler.

In this way, it is indeed possible to provide a bouillon powder which only or mainly contains oil, especially a healthy oil rich in monounsaturated fatty acids and/or polyunsaturated fatty acids, and no or only little fat beside non fat conventional bouillon ingredients.

In addition, such a bouillon powder indeed has no or only little fat solidification after rehydratation with hot water when the rehydrated product is getting cold, and indeed has an improved cold water solubility.

In the present bouillon powder, the oil may be any suitable food grade oil such as chicken fat, not fractionated palm oil or palm olein, but preferably a healthy oil such as sunflower oil, olive oil, mais oil and/or canola oil, for example.

The fat may be palm fat or palm stearin, for example.

The milled filler is a milled crystalline ingredient such as salt (sodium chloride), glutamate and/or sugar (sucrose), for example.

The milled crystalline ingredient has been milled to fine particles having a mean diameter of from 5 to 80 µm.

The mean diameter is defined as a 50% limit (D50) in particle distribution whereby 50% by volume of the particles have a diameter below the 50% limit and 50% by volume of the particles have a diameter above the 50% limit.

Preferably, these fine particles also have a span of from 2.0 to 5.0.

The span is defined as the broadness or width in particle distribution between a 10% limit (D10) and a 90% limit (D90) divided by the mean particle diameter (D50), whereby 10% by volume of the particles have a diameter below the 10% limit and 10% by volume of the particles have a diameter above the 90% limit.

The so called non milled filler may be a powdered crystalline ingredient such as salt, glutamate and/or sugar which has not been milled to an especially fine granulometry but which comprises particles the mean diameter of which is of from about 100 to about 600 µm, preferably from about 200 to about 600 µm and more preferably from about 300 to about 500 µm, for example.

Optionally, dehydrated vegetables and/or herb leafs, for example, may be added to the granulated bouillon powder.

As stated above, the present process for the production of a bouillon powder consists of preparing a premix of powdered constituents comprising, in total powder weight %, from 4 to 95% of a milled filler, up to 95% of a non milled filler, and optionally spices, flavours, and/or plant extracts, and atomising an emulsion comprising, in total powder weight %, from 1 to 20% of an oil and possibly fat and up to 10%, preferably up to 8% and more preferably up to 4% of water onto the dry premix while further mixing, wherein, in total oil and fat weight %, up to 40% or preferably up to 30%, even more preferably up to 20% or even up to 10%, and still even more preferably up to only 5% or even up to only 1% fat are added to the dry premix and/or to the emulsion; wherein the milled filler is a milled crystalline ingredient and has a mean diameter of from 5 to 80 µm; wherein the total amount of milled filler is up to 95%.

Preparing the premix may be carried out by means of any suitable traditional powder mixer such as a horizontal mixer with plough-shaped heads arranged on its horizontal shaft or a ribbon mixer, for example.

The emulsion is atomised through any adequate nozzle such as a simple or a binary nozzle, for example. Further mixing preferably is combined with chopping.

The fat may be added either in solid form to the dry premix or in liquefied form to the emulsion or to the oil, for example.

In a preferred embodiment for the production of a bouillon powder in granulated form, the present process further comprises atomising an emulsion comprising, in total powder weight %, from 1 to 20% of an oil and possibly fat and from 1 to 10%, preferably from 1 to 8% and even more preferably from 1 to 4% of water onto the dry premix while further mixing, granulating and drying. In other words, in this preferred embodiment, the present process further comprises steps of granulating and drying after the further mixing step.

The oil and possibly fat may be atomised through any adequate nozzle such as a simple or a binary nozzle, for example.

Granulating may be carried out in any adequate granulator of the food industry such as a granulator manufactured by the company Alexanderwerk of Remscheid in Germany, for example.

In a preferred embodiment for the production of a bouillon powder of the present invention in agglomerated form, the present process comprises atomising an emulsion comprising, in total powder weight %, from 1 to 20% of an oil and possibly fat and from 1 to 10%, preferably from 1 to 8% and even more preferably from 1 to 4% of water onto the dry premix while further mixing, agglomerating and drying. In other words, in this preferred embodiment, the present process further comprises steps of agglomerating and drying after the further mixing step.

Agglomerating may be carried out in any adequate agglomerator of the food industry such as a fluidised bed agglomerator, for example.

An embodiment of the bouillon powder and of the process for producing it according to the present invention is illustrated in the following Example in which the percentages are by weight unless indicated to the contrary.

The Example is preceded by a short description of the method used for analysing the particle size of the milled filler.

### Method 1: Particle size analysis

The particle size of the milled filler was analysed by means of a laser diffraction particle sizer (MASTERSIZER S, Malvern Instruments Ltd., Malvern/GB), coupled with a fully automated, air pressure controlled dry powder feeder (GMP ultra).

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50)
**D10:** 10% limit (10% by volume of the particles had a diameter below D10)
**D90:** 90% limit (10% by volume of the particles had a diameter above D90)
**Span:** (D90-D10)/D50

### Example 1

A granulated, herb bouillon powder was produced which had the following composition:
- 47 % milled salt
- 33 % milled monosodium glutamate
- 12 % olive oil
- 6.5 % dehydrated powdered aromatics and spices
- 1.0 % colouring green plant extract solution
- 0.5 % dried herbs

The granulometry of the milled salt was as follows:

| | |
|---|---|
| D10: | 8.79 µm |
| D50: | 44.45 µm |
| D90: | 142.54 µm |
| Span: | 3.0 |

The granulometry of the milled glutamate was as follows:

| | |
|---|---|
| D10: | 4.80 µm |
| D50: | 27.27 µm |
| D90: | 101.69 µm |
| Span: | 3.55 |

The production process comprised the following steps:
The green plant extract solution was emulsified with the olive oil in a high pressure homogenisator or in a fast rotating stirrer.

The emulsion was atomised on a premix of the powdered ingredients in a ploughshare mixer with chopper.

The dried herbs were added in the very end.

The mixture thus obtained was granulated in an granulator from Alexanderwerke, Remscheid, Germany.

The granules thus obtained were then dried in a fluidised bed.

The granulated, herb bouillon powder thus obtained contained only olive oil, which is a healthy oil rich in monounsaturated fatty acids and/or polyunsaturated fatty acids, and no fat beside the non fat ingredients.

This powder had no fat solidification after rehydratation with hot water when it was then getting cold and it also was cold water soluble.

## Claims

1. A bouillon and/or seasoning powder, which comprises, in total powder weight %, from 1 to 20% of an oil and possibly fat, from 4 to 95% of a milled filler, and up to 95% of a non milled filler, and, in total oil and fat weight %, up to 40% or preferably up to 30%, even more preferably up to 20% or even up to 10%, and still even more preferably up to only 5% or even up to only 1% fat, as well as optionally spices, flavours, and/or plant extracts;
wherein the milled filler is a milled crystalline ingredient and has a mean diameter of from 5 to 80 µm; wherein the total amount of milled filler is up to 95%.

2. A bouillon and/or seasoning powder according to claim 1, in which the oil is a healthy oil selected from a group comprising sunflower oil, mais oil, olive oil and/or canola oil.

3. A bouillon and/or seasoning powder according to claim 1, in which the milled filler is a milled crystalline ingredient, especially a crystalline ingredient selected from a group comprising salt, glutamate and/or sugar.

4. A bouillon and/or seasoning powder according to claim 3, in which the milled crystalline ingredient comprises fine particles having a mean diameter of from 5 to 80 µm and a span of from 2.0 to 5.0.

5. A process for the production of a bouillon and/or seasoning powder, which consists of preparing a premix of powdered constituents comprising, in total powder weight %, from 4 to 95% of a milled filler, up to 95% of a non milled filler, and optionally spices, flavours, and/or plant extracts, and atomising an emulsion comprising, in total powder weight %, from 1 to 20% of an oil and possibly fat and up to 10%, preferably up to 8% and more preferably up to 4% of water onto the dry premix while further mixing, wherein, in total oil and fat weight %, up to 40% or preferably up to 30%, even more preferably up to 20% or even up to 10%, and still even more preferably up to only 5% or even up to only 1% fat are added to the dry premix and/or to the emulsion;
wherein the milled filler is a milled crystalline ingredient and has a mean diameter of from 5 to 80 µm; wherein the total amount of milled filler is up to 95%.

6. A process according to claim 5, for the production of a bouillon and/or seasoning powder in granulated form, which, after further mixing, further comprises granulating and drying.

7. A process according to claim 5, for the production of a bouillon and/or seasoning powder in agglomerated form, which, after further mixing, further comprises agglomerating and drying.

## Patentansprüche

1. Brüh- und/oder Würzmittelpulver, das, in % des Pulver-Gesamtgewichts, von 1 bis 20 % eines Öls sowie ggf. Fetts, von 4 bis 95 %, eines gemahlenen Füllstoffs, und bis zu 95 % eines nicht gemahlenen Füllstoffs umfasst, sowie, in % des Öl- und Fett-Gesamtgewichts, bis zu 40 % oder vorzugsweise bis zu 30 %, stärker bevorzugt bis zu 20 % oder selbst bis zu 10 %, und noch stärker bevorzugt bis zu nur 5 % oder selbst bis zu nur 1 % Fett sowie ggf. Gewürze, Aromen und/oder Pflanzenextrakte umfasst; wobei der gemahlene Füllstoff ein gemahlener kristalliner Bestandteil mit einem mittleren Durchmesser von 5 bis 80 µm ist; wobei die gesamte Menge gemahlener Füllstoff bis zu 95 % ist.

2. Brüh- und/oder Würzmittelpulver nach Anspruch 1, wobei das Öl ein gesundes Öl ist, das aus einer Gruppe ausgewählt ist, die Sonnenblumenöl, Maisöl, Olivenöl und/oder Canolaöl umfasst.

3. Brüh- und/oder Würzmittelpulver nach Anspruch 1, wobei der gemahlene Füllstoff ein gemahlener kristalliner Bestandteil ist, insbesondere ein kristalliner Bestandteil, der ausgewählt ist aus einer Gruppe, die Salz, Glutamat und/oder Zucker umfasst.

4. Brüh- und/oder Würzmittelpulver nach Anspruch 3, wobei der gemahlene kristalline Bestandteil feine Teilchen mit einem mittleren Durchmesser von 5 bis 80 µm und mit einer Spanne von 2,0 bis 5,0 umfasst.

5. Verfahren zur Herstellung eines Brüh- und/oder Würzmittelpulvers, das besteht in der Herstellung einer Vormischung aus pulverförmigen Bestandteilen, die, in % des Pulver-Gesamtgewichts, von 4 bis 95 %, eines gemahlenen Füllstoffs, bis zu 95 % eines nicht gemahlenen Füllstoffs sowie ggf. Gewürze, Aromen und/oder Pflanzenextrakte umfasst, sowie im Vernebeln einer Emulsion, die, in % des Pulver-Gesamtgewichts, von 1 bis 20 % eines Öls sowie ggf. Fetts und bis zu 10 %, vorzugsweise bis zu 8 % und stärker bevorzugt bis zu 4 %, Wasser umfasst, über die trockene Vormischung unter weiterem Mischen, wobei, in % des Öl- und Fett-Gesamtgewichts, bis zu 40 % oder vorzugsweise bis zu 30 %, stärker bevorzugt bis zu 20 % oder selbst bis zu 10 %, und noch stärker bevorzugt bis zu nur 5 % oder selbst bis zu nur 1 % Fett zu der trockenen Vormischung und/oder der Emulsion zugesetzt werden; wobei der gemahlene Füllstoff ein gemahlener kristalliner Bestandteil mit einem mittleren Durchmesser von 5 bis 80 µm ist; wobei die gesamte Menge gemahlener Füllstoff bis zu 95 % ist.

6. Verfahren nach Anspruch 5, zur Herstellung eines Brüh- und/oder Würzmittelpulvers in granulierter Form, das, nach einem weiteren Mischen, ausserdem eine Granulierung und Trocknung umfasst.

7. Verfahren nach Anspruch 5, zur Herstellung eines Brüh- und/oder Würzmittelpulvers in agglomerierter Form, das, nach einem weiteren Mischen, ausserdem das Agglomerieren und Trocknen umfasst.

## Revendications

1. Poudre de bouillon et/ou d'assaisonnement, qui comprend, en % en poids total de poudre, de 1 à 20 % d'une huile et éventuellement d'une matière grasse, de 4 à 95 % d'une charge broyée, et jusqu'à 95 % d'une charge non broyée, et, en % en poids total d'huile et de matière grasse, jusqu'à 40 % ou de préférence jusqu'à 30 %, encore plus préférablement jusqu'à 20 % ou encore jusqu'à 10 %, et encore plus préférablement jusqu'à seulement 5 % ou encore jusqu'à seulement 1 % de matière grasse, ainsi que facultativement des épices, des arômes et/ou des extraits de plantes;
dans laquelle la charge broyée est un ingrédient cristallin broyé ayant un diamètre moyen de 5 à 80 µm ; dans laquelle la charge broyée totale est jusqu'à 95 %.

2. Poudre de bouillon et/ou d'assaisonnement selon la revendication 1, dans laquelle l'huile est une huile saine choisie dans un groupe comprenant l'huile de tournesol, l'huile de maïs, l'huile d'olive et/ou l'huile de colza.

3. Poudre de bouillon et/ou d'assaisonnement selon la revendication 1, dans laquelle la charge broyée est un ingrédient cristallin broyé, en particulier un ingrédient cristallin choisi dans un groupe comprenant le sel, le glutamate et/ou le sucre.

4. Poudre de bouillon et/ou d'assaisonnement selon la revendication 3, dans laquelle l'ingrédient cristallin broyé comprend de fines particules ayant un diamètre moyen de 5 à 80 µm et un intervalle de 2,0 à 5,0.

5. Procédé de production d'une poudre de bouillon et/ou d'assaisonnement, qui consiste à préparer un prémélange de constituants en poudre comprenant, en % en poids total de poudre, de 4 à 95 % d'une charge broyée, jusqu'à 95 % d'une charge non broyée, et facultativement des épices, des arômes et/ou des extraits de plantes, et à atomiser une émulsion comprenant, en % en poids total de poudre, de 1 à 20 % d'une huile et éventuellement d'une matière grasse et jusqu'à 10 % , de préférence jusqu'à 8 % et plus préférablement jusqu'à 4 % d'eau sur le prémélange sec tout en mélangeant, dans lequel, en % en poids total d'huile et de matière grasse, jusqu'à 40 % ou de préférence jusqu'à 30 %, encore plus préférablement jusqu'à 20 % ou encore jusqu'à 10 %, et encore plus préférablement jusqu'à seulement 5 % ou encore jusqu'à seulement 1 % de matière grasse sont ajoutés au prémélange sec et/ou à l'émulsion;
dans laquelle la charge broyée est un ingrédient cristallin broyé ayant un diamètre moyen de 5 à 80 µm ; dans laquelle la charge broyée totale est jusqu'à 95 %.

6. Procédé selon la revendication 5, pour la production d'une poudre de bouillon et/ou d'assaisonnement sous forme qranulée, qui, après le mélange, comprend en outre la granulation et le séchage.

7. Procédé selon la revendication 5, pour la production d'une poudre de bouillon et/ou d'assaisonnement sous forme agglomérée, qui, après le mélange, comprend en outre l'agglomération et le séchage.
